# EUROPEAN PATENT APPLICATION

(11) **EP 1 798 659 A1**
(43) Date of publication of application: **20.06.2007**
(21) Application number: 05292758.9
(22) Date of filing: 19.12.2005
(51) Int. Cl.: G06F 21/24

(54) **Personal token with parental control**

(71) Applicant: Axalto SA, 92120 Montrouge (FR)
(72) Inventor: Larduinat, Xavier, c/o Axalto S.A., 92120 Montrouge (FR)
(74) Representative: Cour, Pierre

(57) **Abstract**

The invention relates to a personal token (in particular a SIM card), a system comprising a personal token and a communication device (in particular a cellular phone), and a method for parental control of the services of the communication device. The personal token of the invention comprises connection means for connecting to a communication device and parental control means, the parental control means controlling access of a controlled entity to the services offered by the communication device according to a set of rules stored in the personal token. The personal token also comprises rules modification means enabling the modification of the set of rules (access to the rules modification means being restricted to a controlling entity), and a web server, the rules modification means being accessible through at least one web page on the web server.

## Description

The present invention relates to a personal token providing parental control services.
As known in state of the art, parental controls are services available on certain communication devices, allowing a first person (in particular a parent), referred to as "the controlling entity" in the rest of the document, to limit what another person (in particular a child), which is directly or indirectly in subordination to the first person and which is referred to as "the controlled entity" in the rest of the document, can see or do on the communication device. Communication devices are electronic devices with network communication means. Examples of communication devices comprise digital television sets and personal computers connected to the Internet. Parental controls typically allow for the blocking of television stations, the removal of gore from computer games, the blocking of inappropriate websites, such as those containing pornography, or the automatic censoring of swearing. Parental control on a personal computer is usually a client software, running on the PC, that allows the controlling entity to enable or disable access to in particular specified URLs and IP addresses. An example of parental control is included in Norton Internet Security, a product developed by Symantec Corporation, which focuses on providing users of personal computers with Internet security protection. Norton Internet Security integrates parental controls preventing a user from viewing sites considered offensive or pornographic by the designers of the product. State of the art parental controls can be configured by the controlling entity, the controlling entity having administrative privilege on the communication device. However, it turns out that many children have their own computer which they manage themselves, therefore they have administrative privilege. Many children may also have a better understanding of personal computers and communication devices in general than their parents, and can therefore manage to obtain administrative privilege while they are supposed to be controlled entities on the system. The parental controls can consequently be circumvented. In the field of telephony, in particular in cellular telephony, there are some forms of parental controls, in order to limit the number of calls, or the phone numbers that can be called, however such parental controls are normally under the control of the operator (e.g. they can be linked to a specific subscription), and are not convenient to maintain (it is not easy or sometimes not possible to change certain parameters of the parental controls, and anyway such parameter changes have to go through the operator).

The invention relates in particular to a personal token comprising connection means for connecting to a communication device.
Examples of tokens comprise smart cards (e.g. ISO 7816 smart card, USB smart card, SIM card, USIM card, MMC smart card, contact-less smart card etc.), dongles, USB keys, secureMMC devices, One Time Password tokens, memory cards etc. Personal tokens are typically tokens issued to a single individual (the controlled entity in the context of the invention). Personal tokens are normally not shared between different individuals, and usually contain information specific to one individual (personal information). For example each member of a family may have his own SIM card, protected by his own PIN code, with his own personal data (e.g. friends phone numbers, SMS messages sent by the boyfriend, etc.) and plugged in his own cellular phone. Personal tokens enable mobility (they are easy to carry everywhere). For example, each member of a family can carry a bankcard enabling payments anywhere in the world. One usual feature of personal tokens is that they can authenticate the entity using it (e.g. if you need to be in physical possession of the personal token in order to obtain the services related to that personal token). Personal tokens may employ one or more additional authentication factors in order to prevent a thief (or a person finding a lost personal token) from using the personal token. Such additional authentication factors typically comprise something the entity knows (e.g. a password or a PIN code stored in the personal token), or something the entity actually is (e.g. body or behavioral characteristics such as handwritten signature, fingerprint, hand geometry, voice recognition, face recognition or iris recognition, the biometric template being stored in the personal token). Therefore it is possible to achieve a so-called three-factor authentication ("what you know", e.g. a PIN code, "what you are", e.g. a fingerprint, and "what you have", e.g. a personal token) reducing the risks of impersonation. Two factors are sufficient in many applications (biometrics being more complex and expensive to implement than the other two factors, they are used less frequently).
Connection means may rely on contact or contact-less technology (e.g. ISO 7816, Mifare, USB, Bluetooth, etc.), the personal token being inserted in a communication device (or in a communication device peripheral such as a smart card reader) on a permanent basis, or only when an interaction between the personal token and the communication device is needed, or not inserted at all (e.g. contact-less communication).
A communication device is an electronic device able to communicate over a network (be it wired or wireless). GSM, UMTS, WiFi, IrDA, Bluetooth, FireWire, USB, Ethernet or PLC (power line communication) are non-limitative examples of networking technologies that can be used by the communication device in order to communicate. The communication device can be for example a mobile phone, a Personal Digital Assistant (a.k.a PDA), a smart phone (i.e. a mobile phone with PDA capability), a laptop or desktop computer, an Internet kiosk, etc. The connection means often serve as both communication means and power supply means, the personal token having usually no embedded battery.
Personal tokens of the invention comprise parental control means, in order to control access of a controlled entity (in particular a child) to services offered by the communication device according to a set of rules stored in the personal token. The communication device services are preferably designed in order not to work when the personal token of the invention is absent, i.e. simple removal of the personal token should not be sufficient to suppress parental control. Designing services of this kind may consist in providing at least part of the service in encrypted form, only the personal token being able to decrypt the encrypted part of the service. Personal tokens of the invention further comprise rules modification means, enabling the modification of the aforementioned set of rules, access to the rules modification means being restricted to a controlling entity. For example, rules modification means may allow the controlling entity to add new rules, remove existing rules, or change a rule (e.g. while the rule was previously only forbidding sex related contents, it can forbid violent contents as well after modification). The access restriction to the rules modification means can be implemented with techniques well adapted for authenticating a person, for example techniques based on credentials including PIN codes, administrative passwords, biometrics etc. Consequently, only a controlling entity (able to authenticate as a controlling entity towards the personal token) has the possibility to change the set of rules. Controlled entity (or any entity other than controlling entity) attempts to use the rules modification means result for example in the rules modification means being blocked after a predefined number (e.g. three) of unsuccessful controlling entity authentication attempts (the controlled entity doesn't know the controlling entity's credentials). The personal token of the invention further comprises a web server, the rules modification means being accessible through at least one web page on said web server. How to include a web server in a personal token is known in state of the art. In order to better support the web server included in the personal token, connection means preferably comprise a TCP/IP stack. As known from state of the art, the term web server can have two meanings: (1) a computer that is responsible for accepting requests (in particular HTTP requests) from web browsers, and serving them web pages, which are usually HTML documents, or (2) a computer program that provides the functionality described in the first sense of the term. In the context of the invention, the term "web server" is taken in the second meaning. In the context of the invention a WAP server is considered a WEB server. The use of web pages dynamically generated by the rules modification means and posted on the web server is advantageous because it avoids the need for a specific software on the communication device for managing the rules configuration. It is also advantageous in that it allows remote management as will be discussed below. With the web server of the personal token coupled with the rules modification means, it is sufficient for the communication device to have a web browser and a protocol stack supporting web communications with the personal token (no need for a specific application inside the communication device for modifying the rules). It is preferred to communicate with the web server through a secure protocol such as SSL in order to avoid eavesdropping or modification of the rules as they travel from the web browser to the web server of the personal token. A secure protocol makes it very difficult for the controlled entity to use any software intercepting web communications and replacing them with web communications containing the rules settings of its choice.

The parental control means of personal tokens according to the invention may comprise blocking means for blocking access of a controlled entity to services offered by a communication device according to a set of rules stored in the personal token. Blocking means are a form of parental control consisting in denying access to certain services (this is an all or nothing mode). With blocking means, certain services are allowed, and others are forbidden.

The parental control means of personal tokens according to the invention may also comprise filtering means for filtering access of a controlled entity to services offered by a communication device. With filtering means, certain contents of each of the communication device services are filtered, according to a set of rules stored in the personal token. Therefore filtering means are complementary with blocking means. Filtering means may allow certain services, but filter them, while blocking means operate in a binary mode (block or allow the service). The filtering may consist in exercising some form of censorship, based on the rules that have been defined. For example, certain categories of words may be automatically removed or replaced by less offensive synonymous words (either in text or in soundtracks, etc.), violent images might be removed or replaced, etc. In preferred embodiments, communication device services are designed to support parental control and may be driven by the personal token. It is possible that all contents of the services are filtered if all contents are deemed offensive based on the set of rules. Certain forms of filtering may be too intensive for certain personal tokens (e.g. personal tokens with low processing capabilities). Examples of such forms of filtering include voice recognition and voice synthesis, image analysis etc. The personal token may consequently partially delegate the filtering to the communication device or to the communication device service provider (e.g. network operator proving TV services on a cellular phone). For example, the communication device service operator may automatically tag certain types of contents (e.g. by performing a preliminary filtering) and provide alternate contents, which the personal token may select easily if the rules forbid the initial contents (by an analyzing the tags, e.g. with a parser, instead of analyzing the whole contents). The tags are preferably digitally signed in order to prevent tampering with them.

The personal token of the invention preferably comprises network authentication means for granting to the controlled entity access to a network through the communication device. In such embodiments, the personal token is therefore needed whenever access to the network is desired, and is less likely to be forgotten by the controlled entity. In the context of cellular telephony, the personal token is therefore preferably a SIM card (or its variants such as USIM cards etc.). A SIM card is in general permanently present in the cellular phone, and it is advantageous to combine the parental control and network authentication in a single device. SIM card being in widespread use, the combination also gives the possibility to implement parental control with minimized modification in communication devices (cellular phones having the necessary electronic components to communicate with the SIM card).

Certain communication device services may benefit from certain parental control components being installed on the communication device (instead of the whole parental control being performed in the personal token, part of the parental control may be performed inside the communication device). In such a case, in order to facilitate the installation of parental control on communication devices which do not contain at least one parental control component needed for a better parental control, it is proposed to store installation files of the parental control components which are to be installed on the communication device on the personal token (the parental control components of the communication device, if any is needed, being designed to communicate with the parental control means of the personal token). The installation of parental control components on a communication device not equipped with such parental control components is preferably triggered by the establishment of the first communication of the personal token with the communication device. For example, in the case of a SIM card and a GSM cellular phone, the parental control installation files can be stored in the SIM card web server (it is also possible to use an external web server, but this requires an active Internet connection). The SIM card may detect the first power-on of the GSM cellular phone and manage the installation of the parental control components by launching the GSM cellular phone's web browser on a specific URL (where the installation files are stored). In order to launch the GSM phone's web browser, the SIM card preferably invokes the "launch browser" SIM Toolkit proactive command. If the GSM phone does not support this command, the SIM card can send a message to an external server that will send a WAP push message to the GSM cellular phone.
The invention further relates to a system comprising a communication device and a personal token as described above. The personal token incorporates a web server as described above. It is advantageous to incorporate, in the communication device, means for making the personal token web server accessible from the Internet when the communication device is connected to the Internet. Such means may be routing means. For example, if the communication device is a cellular phone with Internet access, the routing means may enable a controlling entity to change the rules inside the personal token although the controlled entity may be far away, i.e. it may enable a remote access capability (the controlling entity can remotely and securely assign settings). The controlling entity may for example limit incoming calls to the cellular phone when the controlled entity is out of France, considering that roaming agreement result in incoming calls being charged a high rate (instead of being free of charge). The controlling entity may do so although the controlled entity is already abroad, thanks to an Internet access to the communication device used by the controlled entity. The routing means may comprise an HTTP proxy allocating a local port number (for example 5050) corresponding to the SIM card. When a browser attempts to access an URL on this port (for example, in case the browser of the cellular phone is used, http://127.0.0.1:5050..., "127.0.0.1" being the TPC/IP address for local access), the HTTP request may then be sent to this HTTP proxy which may forward it to the SIM HTTP web server. The routing means may also comprise a NAT (Network Address Translation, which is a technique well known in state of the art), the web server of the personal token being assigned an IP address internally, and the IP address being translated into another IP address for browsers accessing the web server of the personal token from the Internet.
The invention also relates to a method for a controlling entity to control access of a controlled entity to the services of a communication device, the method comprising connecting a personal token to the communication device. The personal token of the method comprises parental control means controlling access of the controlled entity to the services offered by the communication device according to a set of rules stored in the personal token. The personal token also comprises rules modification means enabling the modification of the aforementioned set of rules, access to the rules modification means being restricted to the controlling entity. The personal token further comprises a web server, the rules modification means being accessible through at least one web page on said web server.
Figure 1 shows two personal tokens according to the invention.
Figure 2 is a schematic view of the software architecture of a personal token according to a preferred embodiment of the invention.
Figure 3 shows a communication device (mobile phone of a system according to a preferred embodiment of the invention).
Figure 4 shows a web page generated by the rules modification means of the personal token.

A preferred embodiment of the invention is detailed below in reference to the above figures.

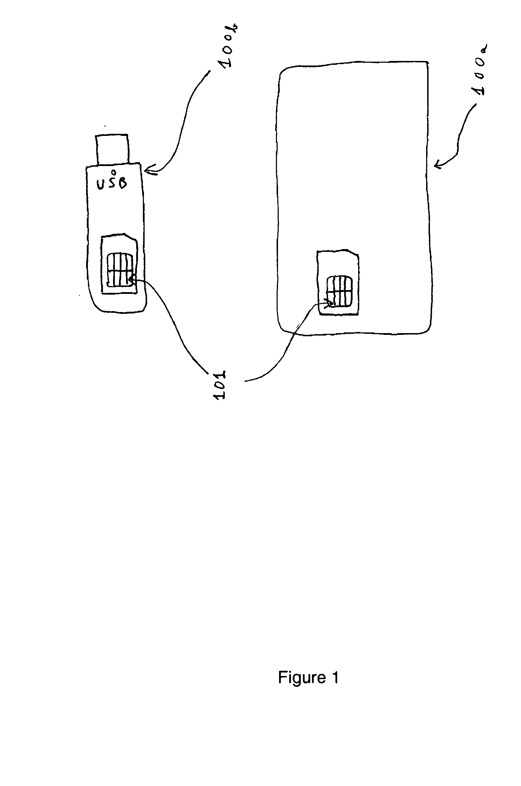

Figure 1 shows two form factors of a personal token according to the invention, here a USB smart card. The first form factor 100a is a regular smart card form factor (from which the plug can be pulled out as known in state of the art) while the second form factor 100b is a USB personal token form factor, consisting of a personal token comprising a USB smart card plug inserted therein in a manner known in state of the art (e.g. Axalto e-gate smart card). In a preferred embodiment, the smart card is a SIM card. The personal tokens of Figure 1 include a microchip 101. It is preferred but not compulsory to have a single microchip. It is also possible to use separate microchips, for example a distinct microchip could be used for the connection means 102 (e.g. USB interface). In a preferred embodiment, the SIM card is a VLSIM (very large SIM card, having high memory capacity) hosting a web server. The preferred connection means are based on the USB standard (which is fast and powerful) but other connection means are possible (e.g. MMC type interface or regular ISO 7816 interface, the latter being much slower). Typical use of the above personal token 100a, 100b consists in assigning a distinct personal token 100a, 100b to each child of a family (e.g. son and daughter), the father and/or mother being controlling entity (or entities) for the son's personal token 100a, 100b and for the daughter's personal token 100a, 100b. The personal tokens 100a, 100b enable mobility (the son and daughter can go to different schools and have simultaneously access to services controlled by their personal token 100a, 100b). The personal tokens 100a, 100b also provide a good security (in particular the "what you have" factor), e.g. only the child can use his personal token 100a, 100b. If the child loses his token or if his personal token is stolen, the child or his parents can immediately revoke the personal token 100a, 100b in a manner known in the art, thereby stopping the service. The personal tokens 100a, 100b preferably implement at least two-factor authentication.

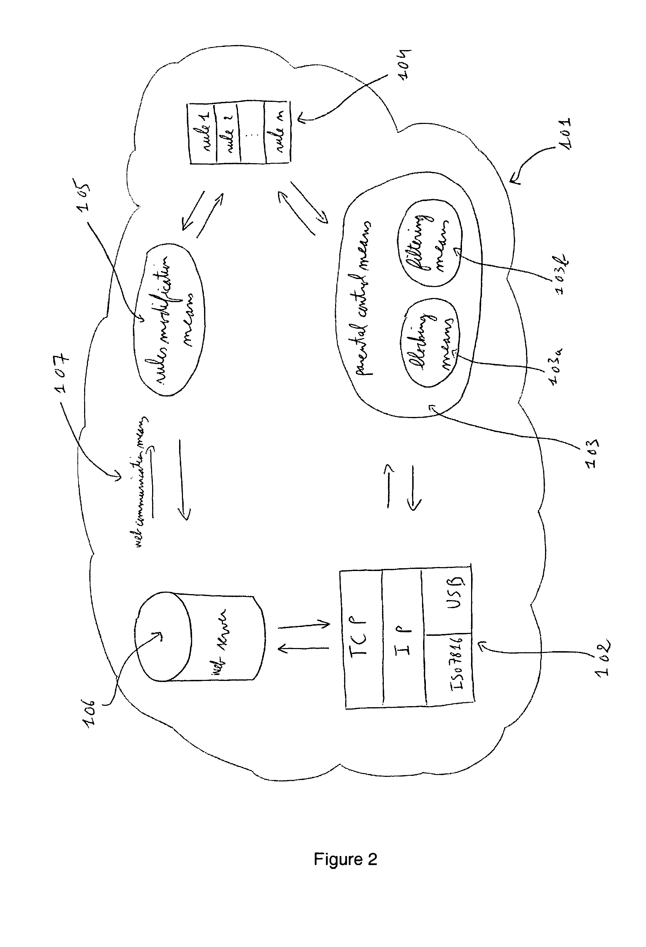

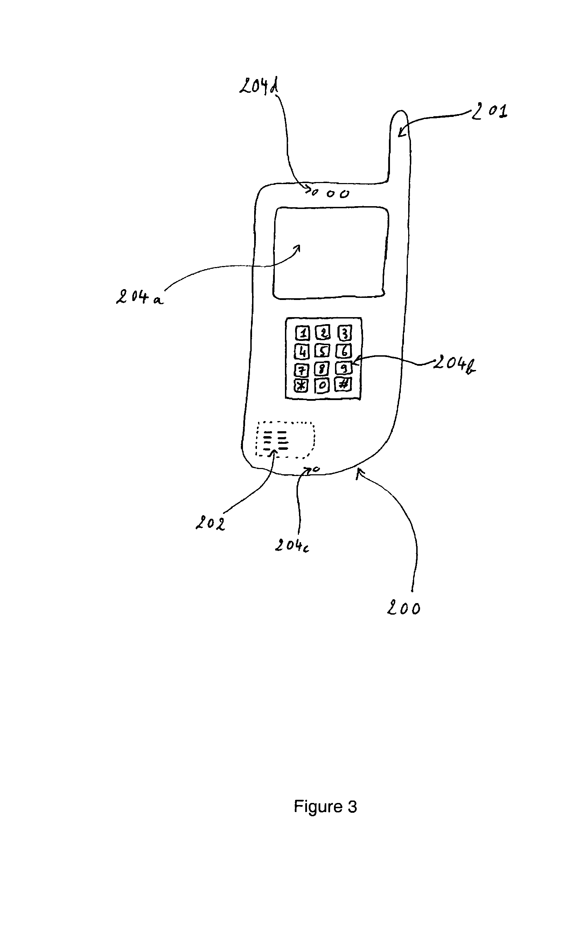

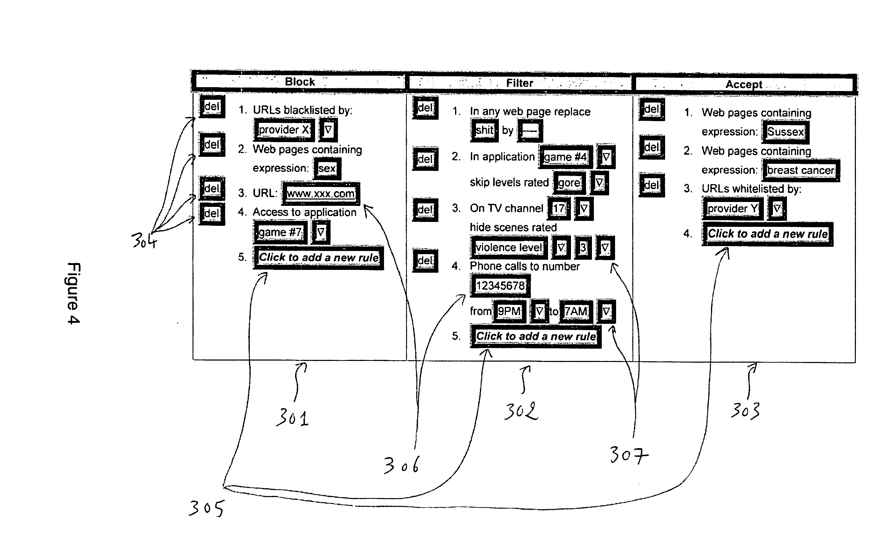

The architecture of the personal token according to the invention shown on Figure 2 comprises connection means 102 (consisting, in this embodiment, of a TCP/IP stack over USB and ISO 7816 physical layers, the latter being useful in particular for legacy environments), parental control means 103 (comprising blocking means 103a and filtering means 103b) based on a set of rules 104, rules modification means 105, a web server 106, and web communication means 107 for the rules modification means 105 to communicate with the web server 106 (the rules modification means 105 may use the web communication means 107 in particular to post web pages on the web server 106, the web pages offering a graphical user interface for a controlling entity to modify the set of rules 104).
The communication device 200 of Figure 3 is a mobile phone and comprises network communication means 201, connection means 202 for connecting the mobile phone to a personal token 100a, 100b, and a user interface 204 (comprising an LCD 204a, a keypad 204b, a microphone 204c and a speaker 204d). The web pages of the personal token 100a, 100b are preferably displayable on the LCD 204a of the communication device 200, or on the screen of another communication device to which the personal token 100a, 100b is connected, either directly or through the Internet (e.g. via the communication device 200). The communication device 200 is able to deliver a number of services, such as playing MP3 music, showing movies, connecting to the Internet, sending and receiving e-mails etc. The services are delivered through the user interface (in particular the LCD 204a and the speaker 204d), possibly in an interactive manner (the user influencing the service delivery thanks to the keypad 204b or the microphone 204c). In preferred embodiments the mobile phone 200 is a 3G phone (or at least a 2G phone), able to offer a wide range of services subject to parental control.
Before the services are delivered to the controlled entity using the communication device 200, they have to be approved by the parental control means 103. Approval may include decrypting part of the service, which is therefore unavailable in absence of approval. Approval is granted based on a set of rules 104.
The web page of Figure 4 contains examples of parental control rules. The parental control rules of the example comprise blocking rules 301 (for blocking means 103a), filtering rules 302 (for filtering means 103b), and accepting rules 303. Accepting rules 303 are optional. Accepting rules 303 may be convenient in particular when they are easier to formulate than blocking rules 301 (e.g. it is easier to accept calls to the grandmother and to the parents than to block calls to each of the fifty friends recorded in the phone book). Accepting rules 303 may also be used to mitigate undesired side effects of other rules, for example blocking every web page containing "sex" would block "Sussex" which is not necessarily desired, or blocking "breast" would block access to pages related to medical information (such as breast cancer) which is not necessarily desired. The parental control means 103 advantageously comprise an option letting the controlling entity define which of the rules have precedence over the other in case of conflicting rules (e.g. sorting the rules by order of decreasing importance). Conflicting rules are different rules enforceable for the same situation. It may be decided that when a service passes an accepting rule 303, it doesn't go through conflicting rules of lower precedence (it is accepted), while when it doesn't it continues with other conflicting rules in order to determine whether it is authorized or not. Conversely, when a service is blocked by a blocking rule 301, it doesn't go through conflicting rules of lower precedence (it is blocked). It may be decided that the filtering rule 302 of highest precedence of a set of conflicting filtering rules 302 is enforced, even if a conflicting accepting rule 303 has already been enforced (i.e. the service has been approved by an accepting rule 303, but will nonetheless be filtered by a filtering rule 302).
The web page of Figure 4 shows a possible manner of configuring the set of rules 104 for the parental control means 103. Each of the blocking rules 301 is numbered and is associated with a delete button 304 in order to delete the associated rule. Delete buttons 304 are preferably available for the filtering (302) and accepting (303) rules as well (although they are not referenced on Figure 4 for clarity purpose). The group of rules of each of the three categories (301, 302 and 303) is followed by a button 305 for adding a new rule in this category. When clicking the button 305 the controlling entity is presented with a selection of rules types available in the category. Upon selection of a certain type, the controlling entity can configure the newly created rule of selected type.
Configuration may be based on text boxes 306 which the controlling entity can fill as it likes (not all text boxes are referenced on Figure 4 in order not to overload the figure with arrows). For example rule number 2 of the blocking rules 301 contains a word ("sex") which the controlling entity wants to prohibit (any web page containing that key word is going to be censored, i.e. it will not be displayed to the controlled entity). Similarly, rule number 3 contains the URL of a web site typed by the controlling entity, which the controlling entity wants to block (www.xxx.xom). Rule number 1 of the filtering rules 302 contains a text box 306 with a key word ("shit") which the filtering means 103b are ordered to replace by a series of dashes (typed in the text box 306 next to the right). Rule number 4 contains a phone number (in another text box 306) which dialing is to be forbidden at certain hours, and in the accepting rules 303, rules number 1 and 2 contain words ("Sussex" and "breast cancer" typed in text boxes 306) which the parental control means 103 are asked not to censor, i.e. web pages containing such words are to be displayed normally (unless another rule having precedence excludes those web pages).
Configuration may also be based on drop down lists 307, in which the controlling entity cannot type anything but instead has to select among the predefined choices that are offered by the rules modification means 105. For example, rule number 1 of the blocking rules 301 blocks all web sites which URL belongs to the blacklist provided by a provider X (such as a company or organization specialized in parental control, which built the blacklist in question). Provider X is one of the predefined choices of a drop down list 307. The controlling entity can only select the provider of the blacklist within the list of providers. Such providers preferably update their blacklists regularly, therefore each time a web browser of the communication device 200 attempts to connect to a web site, it is advantageous to check whether a new blacklist is available. It is also advantageous to update the list of blacklist providers regularly. To this end, the rules modification means 105 can connect on a regular basis to a predefined server in order to check for updates (withdrawn providers of blacklists, new providers, etc.). Rule number 4 of the blocking rules 301 also comprises a drop down list 307, which is built dynamically based on the applications installed on the communication device 200. In a preferred embodiment, a list of applications which are likely to be offensive is maintained in the set of rules 104 (and preferably updated regularly in a manner similar to the aforementioned provider list), and the applications present in the communication device 200 are reported to the personal token 100a, 100b which identifies those which are offensive and reports them to the controlling entity through web pages available on the web server 106. Certain applications can be designed to support parental control, in that they can cooperate with parental control means of the personal token (e.g. they can hide certain contents on parental control means request). Such applications are preferably designed to be blocked or filtered when a policy (e.g. the set of rules 104 of the personal token 100a, 100b) requires it. However, when the application does not support parental control, the personal token 100a, 100b must use a method independent of the application in order to deactivate this application. For example, the personal token may install a parental control application on the communication device 200, the parental control application being driven by the parental control means of the personal token. Such parental control application may deactivate offensive applications reported by the personal token 100a, 100b by killing all corresponding running processes. Such parental control application is therefore an example of parental control components which installation files may be present on the personal token 100a, 100b and installed on the communication device 200 upon first connection of the personal token 100a, 100b with the communication device 200. The above application independent method for deactivating offensive applications is less powerful than a deactivation supported by the application, but represents a significant improvement over state of the art.
Another example of rule using a drop down list 307 is rule number 2 of the filtering rules 302. This time, the rule deals with an application designed for parental control. The application is identified in a first drop down list 307 (game #4), and the application rates the offensive nature of each level. Here, the controlling entity decided to skip all levels which offensive nature is rated "gore" or higher. It is possible to do the same with applications not designed for parental control, as explained below.
Yet another example of rule configured by a drop down list 307 is the rule number 3 of the filtering rules 302. This rules identifies a TV channel (e.g. a digital TV channel viewable on 3G phones, which in the example is channel number 17), and the types of scenes which are to be hidden (i.e. the channel is normally displayed but is interrupted from time to time when the rule is matched). This rule is based on the assumption that the TV channel broadcasts the rating together with the scenes (C.F. aforementioned digitally signed tags). However, if the CPU of the communication device 200 is powerful enough, it is possible to have a parental control application analyzing images displayed on the LCD 204a and/or analyzing the dialogues which are listened to by the controlled entity on the speaker 204d, and to censor them when certain patterns are identified. Such a parental control application can be installed from the personal token 100a, 100b in the manner described above upon first connection of the personal token 100a, 100b. Such a parental control application cooperates with the parental control means of the personal token 100a, 100b.
Another example of rule configured by a drop down list 307 is rule number 3 of the accepting rules 303, which defines a number of URLs which are to be accepted (e.g. URLs which could match some blocking rules 301 but are nonetheless accepted due to a prevailing accepting rule 303). The URLs are defined by a provider which the controlling entity selects from a number of providers in a drop down list 307 (e.g. www.dickens.com could be whitelisted although it contains "dick").
Of course the above described examples are non limitative, and it is possible to implement other types of rules, such as rules blocking particular IP addresses (marked as undesirable), blocking access to any URL containing certain keywords (e.g. based on key words meta-search), blocking any undesired e-mail address, either for e-mail sending operations, e-mail receiving operations, or both, blocking any undesired phone number (for inbound, outbound, or inbound and outbound calls), or defining a time table with phone calls, web access and gaming authorizations.

## Claims

1. A personal token (100a, 100b) issued to a controlled entity, said personal token comprising connection means (102) for connecting to a communication device (200), said personal token (100a, 100b) being **characterized in that** it comprises parental control means (103), said parental control means (103) controlling access of said controlled entity to services offered by said communication device (200) according to a set of rules (104) stored in said personal token (100a, 100b), **in that** it comprises rules modification means (105), said rules modification means (105) enabling modification of said set of rules (104), access to said rules modification means (105) being restricted to a controlling entity, and **in that** it comprises a web server (106), the rules modification means (105) being accessible through at least one web page on said web server (106).

2. The personal token (100a, 100b) according to claim 1, the parental control means (103) comprising blocking means (103a) for blocking access of a controlled entity to services offered by a communication device (200) according to a set of rules (104) stored in said personal token (100a, 1 00b).

3. Personal token (100a, 100b) according to any previous claim, the parental control means (103) comprising filtering means (103b) for filtering access of a controlled entity to services offered by a communication device (200), whereby certain contents of each of said communication device services are filtered according to a set of rules (104) stored in said personal token (100a, 100b).

4. Personal token (100a, 100b) according to any previous claim, the personal token (100a, 100b) comprising network authentication means for granting to the controlled entity access to a network through the communication device (200).

5. Personal token (100a, 100b) according to claim 4, the personal token being a SIM card.

6. A system comprising a communication device (200) and a personal token (100a, 100b), the system being **characterized in that** the personal token (100a, 100b) is a personal token (100a, 100b) according to any previous claim.

7. The system according to claim 5, the communication device (200) comprising means for making the personal token web server (106) accessible from the Internet when said communication device (200) is connected to the Internet.

8. System according to claim 5 or 7, the communication device (200) being a cellular phone (200).

9. Method for a controlling entity to control access of a controlled entity to services of a communication device (200), the method being **characterized in that** it comprises connecting a personal token (100a, 100b) to said communication device (200), the personal token (100a, 100b) comprising parental control means (103), said parental control means (103) controlling access of said controlled entity to the services offered by said communication device (200) according to a set of rules (104) stored in said personal token (100a, 100b), the personal token (100a, 100b) comprising rules modification means (105), said rules modification means (105) enabling the modification of said set of rules (104), access to said rules modification means (105) being restricted to said controlling entity, the personal token (100a, 100b) comprising a web server (106), the rules modification means (105) being accessible through at least one web page on said web server (106).
